# FASCICULE DE BREVET EUROPEEN

(11) **EP 3 962 812 B1**
(45) Date de publication et mention de la délivrance du brevet: **22.11.2023**
(21) Numéro de dépôt: 20719199.0
(22) Date de dépôt: 20.04.2020
(51) Int. Cl.: B64D 11/00, B64D 11/06

(54) **ENSEMBLE DE SIÈGES, NOTAMMENT POUR UN AVION**
SITZGRUPPE, INSBESONDERE FÜR FLUGZEUGE
SET OF SEATS, ESPECIALLY FOR AIRPLANES

(30) Priorité: 30.04.2019 FR 1904539
(43) Date de publication de la demande: 09.03.2022
(73) Titulaire: Safran Seats, 78370 Plaisir (FR)
(72) Inventeur: JASNY, Franck, 18190 VENESMES (FR); EHRMANN, Charles, 78610 LES BREVIAIRES (FR); LIGONNIERE, Laurent, 36100 ISSOUDUN (FR); GUERRA, Daniele, 18570 LA CHAPELLE SAINT URSIN (FR); SIONG, Blong, 36000 CHATEAUROUX (FR)
(74) Mandataire: Marconnet, Sébastien
(86) Numéro de dépôt international: PCT/EP2020/060959
(87) Numéro de publication internationale: WO 2020/221610

(56) Documents cités:
- WO-A2-2015/061688
- FR-A1- 3 059 951

## Description

La présente invention porte sur un ensemble de sièges, notamment pour un avion. L'invention trouve une application particulièrement avantageuse pour les sièges d'avion de type "classe affaires". L'invention pourra également être mise en oeuvre avec des sièges installés dans d'autres moyens de transport, comme par exemple des sièges de bus, de trains, ou de bateaux.

Les sièges d'avion de type "classe affaires" offrent aux passagers différentes positions de confort, de la position "assise" jusqu'à une position "allongée" dans laquelle le siège définit un plan de couchage sensiblement horizontal pour le passager.

Le document WO2015/155687 décrit un ensemble de sièges individuels destinés à être installés dans une cabine d'avion comportant un premier siège et un deuxième siège disposés en regard l'un de l'autre. Chaque siège présente une largeur qui est plus grande qu'une largeur d'un siège conventionnel, de sorte que cela permet au passager de s'asseoir suivant différentes orientations. Par exemple, un passager peut être assis de façon à avoir son corps orienté suivant une direction qui est sensiblement parallèle à l'axe du siège, ou le passager peut être assis de façon à avoir son corps orienté suivant un angle non nul pouvant atteindre jusqu'à 90 degrés par rapport à l'axe du siège.

Une console centrale est disposée entre le premier siège et le deuxième siège. La console centrale comporte une première zone de pieds et une deuxième zone de pieds qui sont ouvertes suivant deux directions opposées l'une par rapport à l'autre. La première zone de pieds est associée au premier siège en regard duquel se situe l'ouverture de la première zone de pieds. La deuxième zone de pieds est associée au deuxième siège en regard duquel se situe l'ouverture de la deuxième zone de pieds.

Chaque zone de pieds est délimitée par une paroi supérieure formant une table pour le siège qui n'a pas accès à l'ouverture de la deuxième zone de pieds. Une telle configuration des zones de pieds permet d'optimiser la densité de places à l'intérieur de la cabine mais réduit l'espace de vie du passager du fait du positionnement de chaque zone de pieds à proximité du siège opposé. Il existe donc le besoin de définir une configuration assurant un compromis entre l'optimisation du nombre de places et l'espace disponible pour chaque passager tout en garantissant le respect des conditions de sécurité.

L'invention vise à combler efficacement ce besoin en proposant un ensemble de sièges individuels destinés à être installés dans une cabine d'avion, ledit ensemble comportant:
- un premier siège et un deuxième siège disposés en regard l'un de l'autre, chaque siège comportant une assise et un dossier,
- une console centrale disposée entre le premier siège et le deuxième siège, ladite console centrale comportant une première zone de pieds et une deuxième zone de pieds s'étendant suivant deux directions opposées l'une par rapport à l'autre,
- la première zone de pieds étant associée au premier siège en regard duquel se situe une ouverture de la première zone de pieds, ladite première zone de pieds étant délimitée par une paroi supérieure formant une table pour un passager du deuxième siège qui n'a pas accès à l'ouverture de la première zone de pieds,
- la deuxième zone de pieds étant associée au deuxième siège en regard duquel se situe une ouverture de la deuxième zone de pieds, ladite deuxième zone de pieds étant délimitée par une paroi supérieure formant une table pour un passager du premier siège qui n'a pas accès à l'ouverture de la deuxième zone de pieds, caractérisé en ce qu'une largeur de l'assise du premier siège est plus petite dans une partie de l'assise située en regard de la deuxième zone de pieds par rapport à une largeur d'une partie de l'assise disposée en regard de la première zone de pieds de façon à augmenter un espace entre l'assise du premier siège et la deuxième zone de pieds.

Selon une réalisation, dans la partie de l'assise du premier siège située en regard de la deuxième zone de pieds, au moins une portion d'un bord avant de ladite assise présente une forme courbe.

Selon une réalisation, une largeur de l'assise du deuxième siège est plus petite dans une partie située en regard de la première zone de pieds par rapport à une largeur d'une partie de l'assise disposée en regard de la deuxième zone de pieds de façon à augmenter un espace entre l'assise du deuxième siège et la première zone de pieds.

Selon une réalisation, dans la partie de l'assise du deuxième siège située en regard de la première zone de pieds, au moins une portion d'un bord avant de ladite assise présente une forme courbe.

Selon une réalisation, chaque siège présente des bords latéraux sensiblement alignés avec des bords latéraux de l'autre siège.

Selon l'invention, ledit ensemble de sièges comporte un module double porte muni de deux portes mobiles chacune entre une position stockée et une position déployée dans laquelle une porte est apte à obturer transversalement un espace correspondant entre un siège et la console centrale.

Selon une réalisation, ledit ensemble de sièges comporte deux panneaux escamotables mobiles entre une position stockée et une position déployée dans laquelle un panneau obture un espace correspondant disposé au-dessus d'un bord latéral d'un siège situé du côté d'un couloir de circulation.

Selon une réalisation, un ratio entre une somme d'une largeur de la console centrale et de deux épaisseurs de coques fixes entourant les dossiers divisé par une longueur d'un pas dudit ensemble de deux sièges est compris entre 25% et 40%, et vaut de préférence de l'ordre de 33%.

Selon une réalisation, un siège étant convertible entre une position assise et une position allongée, un espace entre le siège et la console centrale est destiné à être comblé par au moins une portion du siège lorsque ce dernier est en position allongée.

Selon une réalisation, lorsqu'un siège est en position allongée, au moins une portion de l'assise est superposée verticalement avec une zone de pieds fermée du côté du siège comportant l'assise.

Selon une réalisation, une surface de lit étant formée par au moins une portion de l'assise et au moins une portion du dossier lorsque le siège est en position allongée ainsi qu'une paroi interne de la zone de pieds ouverte associée audit siège, un ratio entre une aire de la surface de lit divisée par une aire d'un espace de vie associé à un siège est compris entre 90% et 100%.

Selon une réalisation, la console centrale comporte une paroi de séparation.

L'invention a également pour objet une cabine d'avion caractérisée en ce qu'elle comporte au moins une colonne d'ensembles de sièges tels que précédemment définis.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'un ensemble de deux sièges selon la présente invention;
[Fig. 2] La figure 2 est une vue de dessus d'un ensemble de deux sièges selon la présente invention;
[Fig. 3] La figure 3 est une vue de dessus d'une cabine d'avion comportant des ensembles de sièges selon l'invention faisant apparaître des empreintes de surfaces de lits des sièges;
[Fig. 4a] La figure 4a est une vue de côté d'un ensemble de deux sièges selon l'invention muni de panneaux de fermeture en position stockée;
[Fig. 4b] La figure 4b est une vue de côté d'un ensemble de deux sièges selon l'invention muni de panneaux de fermeture en position déployée;
[Fig.5] La figure 5 est une vue de dessus d'une assise d'un siège selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

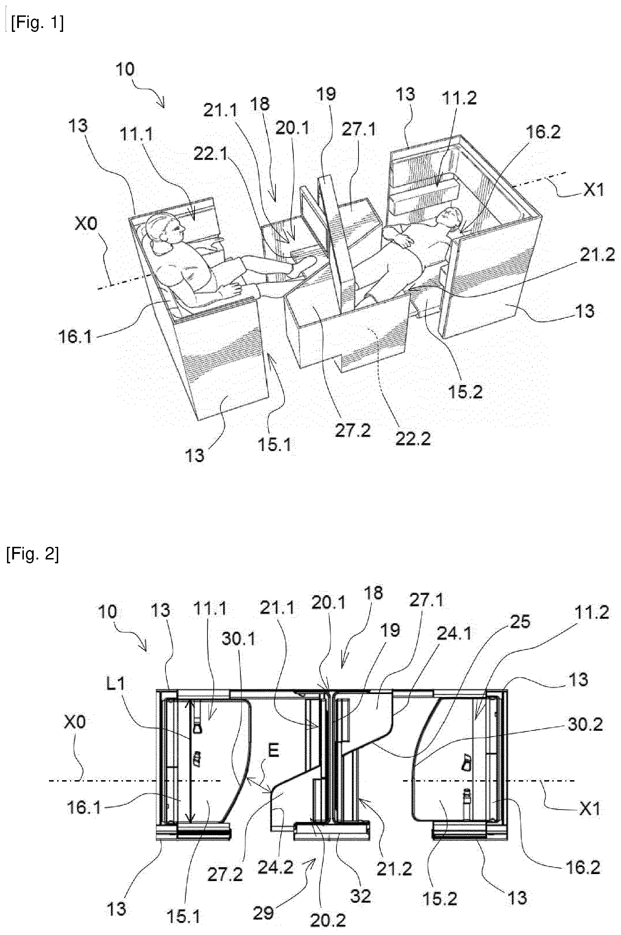

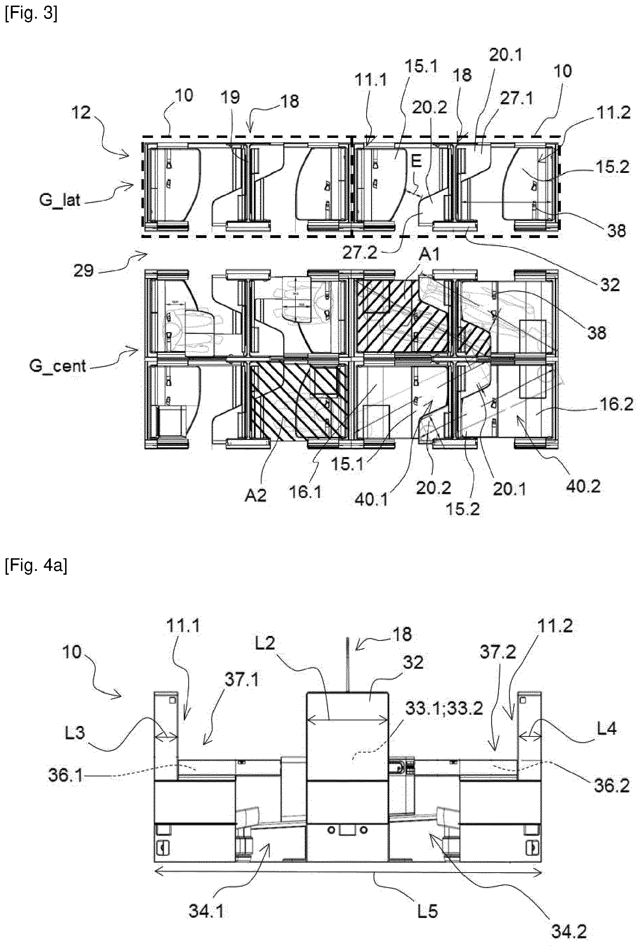

Les figures 1 et 2 montrent un ensemble 10 de sièges individuels 11.1, 11.2 d'axe X0 destiné à être installé dans une cabine d'avion 12 (cf. figure 3). Cet ensemble 10 comporte un premier siège 11.1 et un deuxième siège 11.2 disposés en regard l'un de l'autre. Chaque siège 11.1, 11.2 présente un axe X1 qui est un axe horizontal passant par un plan médian de l'assise et du dossier du siège 11.1, 11.2. Les axes X1 des sièges 11.1, 11.2 pourront être confondus avec l'axe X0 de l'ensemble 10. Chaque siège 11.1, 11.2 présente des bords latéraux 13 sensiblement alignés avec des bords latéraux 13 de l'autre siège 11.1, 11.2. En vue de dessus, l'ensemble 10 de deux sièges 11.1, 11.2 présente une forme rectangulaire. En variante, il pourrait présenter une forme de parallélogramme à angles non droits.

Chaque siège 11.1 (respectivement 11.2) comporte chacun une assise 15.1 (respectivement 15.2) et un dossier 16.1 (respectivement 16.2) qui pourra, le cas échéant, être réalisé en deux parties articulées entre elles. Chaque siège 11.1, 11.2 présente une largeur L1 qui est plus grande qu'une largeur d'un siège conventionnel, de sorte que cela permet à un passager de s'asseoir suivant différentes orientations. Par exemple, le passager peut être assis de façon à avoir son corps orienté suivant une direction qui est sensiblement parallèle à l'axe X1 du siège 11.1, 11.2, ou de façon à avoir son corps orienté suivant un angle non nul pouvant atteindre jusqu'à 90 degrés par rapport à l'axe X1 du siège 11.1, 11.2.

Une console centrale 18 est disposée entre le premier siège 11.1 et le deuxième siège 11.2. La console centrale 18 comporte avantageusement une paroi de séparation 19 entre les deux sièges 11.1, 11.2. La paroi de séparation 19 pourra comporter un emplacement pour le montage d'écrans, et/ou de dispositifs électroniques, et/ou de compartiments de rangement.

La console centrale 18 comporte une première zone de pieds 20.1 et une deuxième zone de pieds 20.2 ouvertes suivant deux directions opposées l'une par rapport à l'autre. La première zone de pieds 20.1 et la deuxième zone de pieds 20.2 s'étendent en saillie de part et d'autre de la paroi de séparation 19 suivant deux directions opposées l'une par rapport à l'autre.

La première zone de pieds 20.1 est associée au premier siège 11.1 en regard duquel se situe l'ouverture 21.1 de la première zone de pieds 20.1. La deuxième zone de pieds 20.2 est associée au deuxième siège 11.2 en regard duquel se situe l'ouverture 21.2 de la deuxième zone de pieds 20.2. De préférence, la première zone de pieds 20.1 et la deuxième zone de pieds 20.2 ne sont pas superposées suivant l'axe X0 de l'ensemble 10. En variante, les zones de pieds 20.1 et 20.2 pourront être superposées partiellement suivant l'axe X0.

Les zones de pieds 20.1, 20.2 comportent respectivement une paroi interne 22.1, 22.2 horizontale sur laquelle peuvent reposer les pieds d'un passager. Les zones de pieds 20.1, 20.2 sont délimitées chacune par un fond correspondant 24.1, 24.2, les fonds 24.1, 24.2 étant reliés entre eux par une paroi commune 25.

En outre, les zones de pieds 20.1, 20.2 présentent chacune respectivement une paroi supérieure 27.1, 27.2 plane correspondante sur laquelle le passager du siège 11.1, 11.2 opposé pourra notamment poser des objets. La paroi supérieure 27.1, 27.2 forme ainsi une table qui pourra servir de surface de travail, de table de repas, de table de cocktail ou de toute autre surface utilisable pour un passager assis dans le siège 11.1, 11.2 opposé (c'est-à-dire le siège 11.1, 11.2 qui n'a pas accès à l'ouverture 21.1, 21.2 de la zone de pieds 20.1, 20.2). Autrement dit, au moins une partie d'une zone de pieds 20.1, 20.2 s'étend dans l'espace de vie occupé par un passager assis dans le siège 11.1, 11.2 opposé. La zone de pieds 20.1 comporte ainsi une paroi supérieure 27.1 formant une table pour le siège opposé 11.2. La zone de pieds 20.2 comporte une paroi supérieure 27.2 formant une table pour le siège opposé 11.1.

Ainsi, un siège 11.1 (respectivement 11.2) donné est associé à une zone de pieds 20.1 (respectivement 20.2) ouverte destinée à recevoir les pieds d'un passager et à une zone de pieds 20.2 (respectivement 20.1) fermée pénétrant dans l'espace de vie du passager et formant une table.

Comme on peut le voir notamment sur la figure 2, une largeur de l'assise 15.1 du premier siège 11.1 est plus petite dans une partie de l'assise 15.1 située en regard de la deuxième zone de pieds 20.2 par rapport à une largeur d'une partie de l'assise 15.1 disposée en regard de la première zone de pieds 20.1 de façon à augmenter un espace E entre l'assise 15.1 du premier siège 11.1 et la deuxième zone de pieds 20.2. Autrement dit, la largeur de l'assise 15.1 est plus petite du côté de la zone de pieds fermée 20.2 que du côté de la zone de pieds ouverte 20.1 associée à l'assise 15.1. Etant donné que dans l'exemple représenté, cet espace E débouche vers un couloir de circulation 29, la forme de l'assise 15.1 à largeur réduite du côté de la deuxième zone de pieds 20.2 facilite l'accès du passager à ce couloir 29, notamment en cas d'urgence.

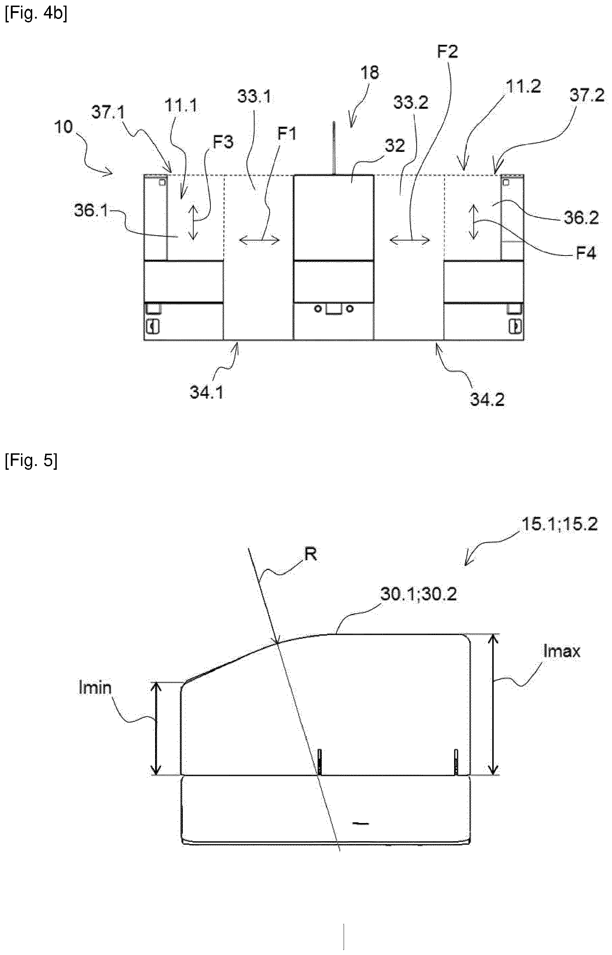

Dans la partie de l'assise 15.1 du premier siège 11.1 située en regard de la deuxième zone de pieds 20.2, au moins une portion d'un bord avant 30.1 de ladite assise 15.1 présente une forme courbe. Cette portion courbe du bord avant 30.1 de l'assise 15.1 se situe dans le prolongement d'une portion de forme rectiligne du bord avant 30.1 située en regard de la première zone de pieds 20.1. Comme on peut le voir sur la figure 5, la portion courbe pourra par exemple être définie par un rayon de courbure R de l'ordre de 70 cm. En variante, la portion courbe du bord avant 30.1 pourra être remplacée par une forme biseautée. Une largeur maximale Imax de l'assise 15.1 est par exemple de l'ordre de 45cm et une largeur minimale Imin de l'assise 15.1 est par exemple de l'ordre de 30cm. Par "de l'ordre de", on entend une variation de plus ou moins 10% autour de la valeur cible.

Par ailleurs, une largeur de l'assise 15.2 du deuxième siège 11.2 est plus petite dans une partie située en regard de la première zone de pieds 20.1 par rapport à une largeur d'une partie de l'assise 15.2 disposée en regard de la deuxième zone de pieds 20.2 de façon à augmenter un espace E entre l'assise 15.2 du deuxième siège 11.2 et la première zone de pieds 20.1. Autrement dit, la largeur de l'assise 15.2 est plus petite du côté de la zone de pieds fermée 20.1 que du côté de la zone de pieds ouverte 20.2 associée à l'assise 15.2.

Dans la partie de l'assise 15.2 du deuxième siège 11.2 située en regard de la première zone de pieds 20.1, au moins une portion d'un bord avant 30.2 de ladite assise 15.2 présente une forme courbe. Cette portion courbe du bord avant 30.2 de l'assise 15.2 se situe dans le prolongement d'une portion de forme rectiligne du bord avant 30.2 située en regard de la première zone de pieds 20.1. Comme on peut le voir sur la figure 5, la portion courbe pourra par exemple être définie par un rayon de courbure R de l'ordre de 70 cm. En variante, la portion courbe du bord avant 30.2 pourra être remplacée par une forme biseautée. Une largeur maximale Imax de l'assise 15.2 est par exemple de l'ordre de 45cm et une largeur minimale Imin de l'assise 15.2 est par exemple de l'ordre de 30cm.

Par ailleurs, un module double porte 32 est muni de deux portes 33.1, 33.2 mobiles chacune entre une position stockée montrée sur la figure 4a et une position déployée montrée sur la figure 4b dans laquelle une porte 33.1, 33.2 est apte à obturer transversalement, du côté du couloir de circulation 29, un espace 34.1, 34.2 correspondant entre un siège 11.1, 11.2 et la console centrale 18. Ainsi, une première porte 33.1 est apte à obturer un premier espace 34.1 entre le premier siège 11.1 et la console centrale 18 lorsque la première porte 33.1 est en position déployée. La deuxième porte 33.2 est apte à obturer un deuxième espace 34.2 entre le deuxième siège 11.2 et la console centrale 18. Lorsque les portes 33.1, 33.2 sont en position stockée, les portes 33.1, 33.2 se superposent au moins en partie à l'intérieur du module double porte 32. Une porte 33.1, 33.2 est mobile entre la position stockée et la position déployée suivant un mouvement de translation latéral, tel qu'illustré par les flèches F1 et F2.

En outre, deux panneaux 36.1, 36.2 escamotables sont mobiles entre une position stockée montrée sur la figure 4a et une position déployée montrée sur la figure 4b dans laquelle un panneau 36.1, 36.2 obture un espace 37.1, 37.2 correspondant disposé au-dessus d'un bord latéral 13 d'un siège 11.1, 11.2 située du côté d'un couloir de circulation 29. Ainsi, un premier panneau 36.1 est apte à obturer un premier espace 37.1 situé au-dessus d'un bord latéral 13 du premier siège 11.1 lorsque le panneau 36.1 est en position déployée. Un deuxième panneau 36.2 est apte à obturer un deuxième espace 37.2 situé au-dessus d'un bord latéral 13 du deuxième siège 11.2 lorsque le panneau 36.2 est en position déployée. Un panneau escamotable 36.1, 36.2 est mobile entre la position stockée et la position déployée suivant un mouvement vertical, tel qu'illustré par les flèches F3 et F4.

Un ratio entre une somme d'une largeur L2 de la console centrale 18 et de deux épaisseurs L3 et L4 de coques fixes entourant les dossiers 16.1, 16.2 divisée par une longueur L5 d'un pas de l'ensemble 10 de deux sièges 11.1, 11.2 est compris entre 25% et 40%, et vaut de préférence de l'ordre de 33%. Par "de l'ordre de", on entend une variation de plus ou moins 10% autour de la valeur cible. On rappelle qu'un pas de deux sièges 11.1, 11.2 correspond à la longueur d'occupation d'un ensemble 10 de deux sièges 11.1, 11.2 à l'intérieur de la cabine d'avion 12. Un tel ratio permet de garantir un espace suffisant entre ces différents éléments de l'ensemble 10 pour permettre une évacuation des passagers en cas d'urgence.

Un siège 11.1, 11.2 est convertible, via une cinématique adaptée, entre une position "assise", correspondant à la position utilisée notamment lors des phases d'arrêt, de décollage, et d'atterrissage de l'avion, et une position "allongée", dans laquelle l'assise 15.1, 15.2 est déplacée en translation vers l'avant (cf. déplacement des boucles de ceinture 38 sur la figure 3) tandis que le dossier 16 bascule sensiblement à l'horizontal, c'est-à-dire qu'il forme un angle compris entre plus 20 degrés et moins 20 degrés par rapport à l'horizontale.

L'espace entre la console centrale 18 et un siège 11.1 (respectivement 11.2) est comblé par au moins une portion du siège 11.1 (respectivement 11.2) correspondant, notamment l'assise 15.1 (respectivement 15.2) et le cas échéant une portion du dossier 16.1 (respectivement 16.2) lorsque le siège 11.1 (respectivement 11.2) est en position allongée.

Avantageusement, lorsque le siège 11.1 (respectivement 11.2) est en position allongée au moins une portion de l'assise 15.1 (respectivement 15.2) est superposée verticalement avec la zone de pieds fermée 20.2 (respectivement 20.1) du côté du siège 11.1 (respectivement 11.2) comportant l'assise 15.1 (respectivement 15.2). En l'occurrence, une portion de l'assise 15.1 (respectivement 15.2) pourra être disposée sous la zone de pieds fermée 20.2 (respectivement 20.1) associée à ladite assise 15.1 (respectivement 15.2).

Une surface de lit 40.1 (respectivement 40.2) est alors formée par au moins une portion de l'assise 15.1 (respectivement 15.2) et au moins une portion du dossier 16.1 (respectivement 16.2) lorsque le siège 11.1 (respectivement 11.2) est en position allongée ainsi qu'une paroi interne de la zone de pieds ouverte 20.1 (respectivement 20.2) associée audit siège 11.1 (respectivement 11.2).

Avantageusement, suivant une configuration optimale montrée sur la figure 3, un ratio entre une aire A1 d'une surface de lit 40.1, 40.2 divisée par une aire A2 d'un espace de vie associé à un siège 11.1, 11.2 est compris entre 90% et 100%. L'aire A2 d'un espace de vie est délimitée, en vue de dessus, par le dossier 16.1 (respectivement 16.2) d'un siège 11.1 (respectivement 11.2), un plan médian de la console centrale 18 parallèle au dossier 16.1 (respectivement 16.2) du siège 11.1 (respectivement 11.2) et deux segments passant chacun par un bord latéral 13 d'un siège 11.1 (respectivement 11.2) et s'étendant entre le dossier du siège 11.1 (respectivement 11.2) et le plan médian de la console centrale 18. Le plan médian de la console centrale 18 pourra correspondre à la paroi de séparation 19.

Selon des variantes de réalisation, le siège 11.1, 11.2 pourra également prendre des positions intermédiaires, dites positions "relax", entre les deux positions extrêmes que constituent la position assise et la position allongée.

En variante, le siège 11.1, 11.2 étant de configuration fixe, l'espace entre le siège 11.1 (respectivement 11.2) et la console centrale 18 est destiné à être comblé par un coussin rapporté définissant une partie de la surface de lit 40.1, 40.2. Le coussin rapporté pourra être destiné à être stocké sous une assise 15.1, 15.2 d'un siège 11.1, 11.2 correspondant. Dans ce cas, les différentes parties du siège (assise 15 et dossier 16) pourront être fixes.

Dans l'exemple représenté sur la figure 3, la cabine d'avion 12 comporte plusieurs colonnes d'ensembles 10 de sièges 11.1, 11.2. La cabine d'avion 12 pourra ainsi comporter un ou deux groupes latéraux G_lat constitués respectivement chacun par une colonne d'ensembles 10 de sièges 11.1, 11.2 positionnée le long d'une paroi latérale du fuselage de la cabine d'avion 12. En outre, un groupe central G_cent est préférentiellement constitué de deux colonnes d'ensembles 10 de sièges 11.1, 11.2. Dans un tel agencement, les colonnes de sièges 11.1, 11.2 du groupe central G_cent sont avantageusement accolées latéralement l'une par rapport à l'autre.

Les colonnes de sièges pourront être formées chacune par plusieurs ensembles 10 de deux sièges 11.1, 11.2 disposés les uns derrière les autres.

Le ou les groupes latéraux G_lat sont respectivement séparés du groupe central G_cent par un couloir de circulation 29. Le passager de chaque siège 11.1, 11.2 a un accès direct au couloir de circulation 29 correspondant. En variante, les groupes latéraux G_lat pourront être formés chacun par plus d'une colonne d'ensembles 10 de sièges 11.1, 11.2. Le groupe central G_cent pourra également comporter plus de deux ou une seule colonne d'ensembles 10 de sièges 11.1, 11.2.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Ensemble (10) de sièges individuels (11.1, 11.2) destinés à être installés dans une cabine d'avion (12), ledit ensemble (10) comportant:
- un premier siège (11.1) et un deuxième siège (11.2) disposés en regard l'un de l'autre, chaque siège (11.1, 11.2) comportant une assise (15.1, 15.2) et un dossier (16.1, 16.2),
- une console centrale (18) disposée entre le premier siège (11.1) et le deuxième siège (11.2), ladite console centrale (18) comportant une première zone de pieds (20.1) et une deuxième zone de pieds (20.2) s'étendant suivant deux directions opposées l'une par rapport à l'autre,
- la première zone de pieds (20.1) étant associée au premier siège (11.1) en regard duquel se situe une ouverture (21.1) de la première zone de pieds (20.1), ladite première zone de pieds (20.1) étant délimitée par une paroi supérieure (27.1, 27.2) formant une table pour un passager du deuxième siège (11.2) qui n'a pas accès à l'ouverture (21.1) de la première zone de pieds (20.1),
- la deuxième zone de pieds (20.2) étant associée au deuxième siège (11.2) en regard duquel se situe une ouverture (21.2) de la deuxième zone de pieds (20.2), ladite deuxième zone de pieds (20.2) étant délimitée par une paroi supérieure (27.2) formant une table pour un passager du premier siège (11.1) qui n'a pas accès à l'ouverture (21.2) de la deuxième zone de pieds (20.2), **caractérisé en ce qu'**une largeur de l'assise (15.1) du premier siège (11.1) est plus petite dans une partie de l'assise (15.1) située en regard de la deuxième zone de pieds (20.2) par rapport à une largeur d'une partie de l'assise (15.1) disposée en regard de la première zone de pieds (20.1) de façon à augmenter un espace (E) entre l'assise (15.1) du premier siège (11.1) et la deuxième zone de pieds (20.2),
- et **en ce que** ledit ensemble comporte un module double-porte (32) muni de deux portes (33.1, 33.2) mobiles chacune entre une position stockée et une position déployée dans laquelle une porte (33.1, 33.2) est apte à obturer transversalement un espace correspondant entre un siège (11.1, 11.2) et la console centrale (18), les portes (33.1, 33.2) se superposant au moins en partie à l'intérieur du module double-porte (32) lorsque les portes (33.1, 33.2) sont en position stockée.

2. Ensemble selon la revendication 1, **caractérisé en ce que** dans la partie de l'assise (15.1) du premier siège (11.1) située en regard de la deuxième zone de pieds (20.2), au moins une portion d'un bord avant (30.1) de ladite assise (15.1) présente une forme courbe.

3. Ensemble de sièges selon la revendication 1 ou 2, **caractérisé en ce qu'**une largeur de l'assise (15.2) du deuxième siège (11.2) est plus petite dans une partie située en regard de la première zone de pieds (20.1) par rapport à une largeur d'une partie de l'assise (15.2) disposée en regard de la deuxième zone de pieds (20.2) de façon à augmenter un espace (E) entre l'assise (15.2) du deuxième siège (11.2) et la première zone de pieds (20.1).

4. Ensemble de sièges selon la revendication 3, **caractérisé en ce que** dans la partie de l'assise (15.2) du deuxième siège (11.2) située en regard de la première zone de pieds (20.1), au moins une portion d'un bord avant (30.2) de ladite assise (15.2) présente une forme courbe.

5. Ensemble de sièges selon l'une quelconque des revendications 1 à 4, **caractérisé en ce que** chaque siège (11.1, 11.2) présente des bords latéraux (13) sensiblement alignés avec des bords latéraux de l'autre siège (11.1, 11.2).

6. Ensemble de siège selon l'une quelconque des revendications 1 à 5, **caractérisé en ce qu'**il comporte deux panneaux escamotables (36.1, 36.2) mobiles entre une position stockée et une position déployée dans laquelle un panneau (36.1, 36.2) obture un espace (37.1, 37.2) correspondant disposé au-dessus d'un bord latéral (13) d'un siège (11.1, 11.2) situé du côté d'un couloir de circulation (29).

7. Ensemble selon l'une quelconque des revendications 1 à 6, **caractérisé en ce qu'**un ratio entre une somme d'une largeur (L2) de la console centrale (18) et de deux épaisseurs (L3, L4) de coques fixes entourant les dossiers (16.1, 16.2) divisé par une longueur (L5) d'un pas dudit ensemble de deux sièges (11.1, 11.2) est compris entre 25% et 40%, et vaut de préférence de l'ordre de 33%.

8. Ensemble de sièges selon l'une quelconque des revendications 1 à 7, **caractérisé en ce qu'**un siège (11.1, 11.2) étant convertible entre une position assise et une position allongée, un espace entre le siège (11.1, 11.2) et la console centrale (18) est destiné à être comblé par au moins une portion du siège (11.1, 11.2) lorsque ce dernier est en position allongée.

9. Ensemble de sièges selon la revendication 8, **caractérisé en ce que** lorsqu'un siège (11.1, 11.2) est en position allongée, au moins une portion de l'assise (15.1, 15.2) est superposée verticalement avec une zone de pieds fermée (20.2, 20.1) du côté du siège (11.1, 11.2) comportant l'assise (15.1, 15.2).

10. Ensemble de sièges selon l'une quelconque des revendications 1 à 9, **caractérisé en ce qu'**une surface de lit (40.1, 40.2) étant formée par au moins une portion de l'assise (15.1, 15.2) et au moins une portion du dossier (16.1, 16.2) lorsque le siège (11.1, 11.2) est en position allongée ainsi qu'une paroi interne (22.1, 22.2) de la zone de pieds (20.1, 20.2) ouverte associée audit siège (11.1, 11.2), un ratio entre une aire (A1) de la surface de lit (40.1, 40.2) divisée par une aire (A2) d'un espace de vie associé à un siège (11.1, 11.2) est compris entre 90% et 100%.

11. Ensemble de sièges selon l'une quelconque des revendications 1 à 10, **caractérisé en ce que** la console centrale (18) comporte une paroi de séparation (19).

12. Cabine d'avion (12) **caractérisée en ce qu'**elle comporte au moins une colonne d'ensembles (10) de sièges (11.1, 11.2) tels que définis selon l'une quelconque des revendications précédentes

## Patentansprüche

1. Anordnung (10) von einzelnen Sitzen (11.1, 11.2) zum Einbau in eine Flugzeugkabine (12), wobei die Anordnung (10) umfasst:
- einen ersten Sitz (11.1) und einen zweiten Sitz (11.2), die einander zugewandt sind, wobei jeder Sitz (11.1, 11.2) eine Sitzfläche (15.1, 15.2) und eine Rückenlehne (16.1, 16.2) umfasst,
- eine Mittelkonsole (18) zwischen dem ersten Sitz (11.1) und dem zweiten Sitz (11.2), wobei die Mittelkonsole (18) einen ersten Fußbereich (20.1) und einen zweiten Fußbereich (20.2) umfasst, die sich in zwei zueinander entgegengesetzten Richtungen erstrecken,
- wobei der erste Fußbereich (20.1) dem ersten einer Öffnung (21.1) des ersten Fußbereichs (20.1) gegenüberliegenden Sitz (11.1) zugeordnet ist, wobei der erste Fußbereich (20.1) durch eine obere Wand (27.1, 27.2) begrenzt ist, die einen Tisch für einen Passagier des zweiten Sitzes (11.2), der keinen Zugang zur Öffnung (21.1) des ersten Fußbereichs (20.1) hat, bildet,
- wobei der zweite Fußbereich (20.2) dem zweiten Sitz (11.2) gegenüber einer Öffnung (21.2) des zweiten Fußbereichs (20.2) zugeordnet ist, wobei der zweite Fußbereich (20.2) durch eine obere Wand (27.2) begrenzt ist, die einen Tisch für einen Passagier des ersten Sitzes (11.1), der keinen Zugang zur Öffnung (21.2) des zweiten Fußbereichs (20.2) hat, bildet,
**dadurch gekennzeichnet, dass** eine Breite der Sitzfläche (15.1) des ersten Sitzes (11.1) in einem dem zweiten Fußbereich (20.2) gegenüberliegenden Teil der Sitzfläche (15.1) kleiner als eine Breite eines dem ersten Fußbereich (20.1) gegenüberliegenden Teils der Sitzfläche (15.1) zur Vergrößerung eines Raumes (E) zwischen der Sitzfläche (15.1) des ersten Sitzes (11.1) und dem zweiten Fußbereich (20.2) ist,
- und dass die Anordnung ein Doppeltürmodul (32) umfasst, das mit zwei Türen (33.1, 33.2) ausgestattet ist, die jeweils zwischen einer verstauten Position und einer ausgefahrenen Position, in der eine Tür (33.1, 33.2) in Querrichtung ein entsprechender Raum zwischen einem Sitz (11.1, 11.2) und der Mittelkonsole (18) schließen kann, bewegbar sind, wobei sich die Türen (33.1, 33.2) zumindest teilweise innerhalb des Doppeltürmoduls (32) überlappen, wenn sich die Türen (33.1, 33.2) in der verstauten Position befinden.

2. Anordnung nach Anspruch 1, **dadurch gekennzeichnet, dass** im dem zweiten Fußbereich (20.2) gegenüberliegenden Teil der Sitzfläche (15.1) des ersten Sitzes (11.1) zumindest ein Abschnitt einer Vorderkante (30.1) der Sitzfläche (15.1) eine gekrümmte Form aufweist.

3. Sitzanordnung nach Anspruch 1 oder 2, **dadurch gekennzeichnet, dass** eine Breite der Sitzfläche (15.2) des zweiten Sitzes (11.2) kleiner in einem der ersten Fußbereich (20.1) gegenüberliegenden Teil als eine Breite eines dem zweiten Fußbereich (20.2) gegenüberliegenden Teils der Sitzfläche (15.2) zum Vergrößern eines Raums (E) zwischen der Sitzfläche (15.2) des zweiten Sitzes (11.2) und dem ersten Fußbereich (20.1) ist.

4. Sitzanordnung nach Anspruch 3, **dadurch gekennzeichnet, dass** in dem dem ersten Fußbereich (20.1) gegenüberliegenden Teil der Sitzfläche (15.2) des zweiten Sitzes (11.2) zumindest ein Abschnitt einer Vorderkante (30.2) der Sitzfläche (15.2) eine gekrümmte Form aufweist.

5. Sitzanordnung nach einem der Ansprüche 1 bis 4, **dadurch gekennzeichnet, dass** jeder Sitz (11.1, 11.2) Seitenkanten (13) aufweist, die im Wesentlichen mit den Seitenkanten des anderen Sitzes (11.1, 11.2) ausgerichtet sind.

6. Sitzanordnung nach einem der Ansprüche 1 bis 5, **dadurch gekennzeichnet, dass** sie zwei einziehbare Platten (36.1, 36.2) umfasst, die zwischen einer verstauten Position und einer ausgefahrenen Position, in der eine Platte (36.1, 36.2) einen entsprechenden Raum (37.1, 37.2) oberhalb einer Seitenkante (13) eines Sitzes (11.1, 11.2) auf der Seite eines Ganges (29) verschließt, bewegbar sind.

7. Anordnung nach einem der Ansprüche 1 bis 6, **dadurch gekennzeichnet, dass** ein Verhältnis einer Summe einer Breite (L2) der Mittelkonsole (18) und zwei Dicken (L3, L4) fester die Rückenlehnen (16.1, 16.2) umgebender Schalen zu einer Teilungslänge (L5) der Anordnung aus zwei Sitzen (11.1, 11.2) zwischen 25% und 40%, vorzugsweise etwa 33%, beträgt.

8. Sitzanordnung nach einem der Ansprüche 1 bis 7, **dadurch gekennzeichnet, dass** ein Sitz (11.1, 11.2) zwischen einer Sitzposition und einer Liegeposition umwandelbar ist, und dass ein Raum zwischen dem Sitz (11.1, 11.2) und der Mittelkonsole (18) so vorgesehen ist, dass er in der Liegeposition des Sitzes (11.1, 11.2) von diesem zumindest teilweise ausgefüllt wird.

9. Sitzanordnung nach Anspruch 8, **dadurch gekennzeichnet, dass** in der Liegeposition eines Sitzes (11.1, 11.2) mindestens ein Teil der Sitzfläche (15.1, 15.2) einen geschlossenen Fußbereich (20.2, 20.1) auf der die Sitzfläche (15.1, 15.2) umfassenden Seite des Sitzes (11.1, 11.2) vertikal überlagert.

10. Sitzanordnung nach einem der Ansprüche 1 bis 9, **dadurch gekennzeichnet, dass** eine Liegefläche (40.1, 40.2) durch mindestens einen Abschnitt der Sitzfläche (15.1, 15.2) und mindestens einen Abschnitt der Rückenlehne (16.1, 16.2) bei der Liegeposition des Sitzes (11.1, 11.2) sowie eine diesem Sitz (11.1, 11.2) zugeordnete Innenwand (22.1, 22.2) des offenen Fußbereichs (20.1, 20.2) und dass ein Verhältnis eines Flächeninhaltes (A1) der Liegefläche (40.1, 40.2) zu einem Flächeninhalt (A2) eines einem Sitz (11.1, 11.2) zugeordnet Wohnraums zwischen 90% und 100% beträgt.

11. Sitzanordnung nach einem der Ansprüche 1 bis 10, **dadurch gekennzeichnet, dass** die Mittelkonsole (18) eine Trennwand (19) umfasst.

12. Flugzeugkabine (12), **dadurch gekennzeichnet, dass** sie mindestens eine Säule von Anordnungen (10) von Sitzen (11.1, 11.2) gemäß einem der vorhergehenden Ansprüche umfasst.

## Claims

1. An assembly (10) of individual seats (11.1, 11.2) to be installed in an aircraft cabin (12), said assembly (10) comprising:
- a first seat (11.1) and a second seat (11.2) facing each other, each seat (11.1, 11.2) comprising a seating surface (15.1, 15.2) and a backrest (16.1, 16.2),
- a central console (18) positioned between the first seat (11.1) and the second seat (11.2), said central console (18) comprising a first foot zone (20.1) and a second foot zone (20.2) extending in two opposite directions relative to each other,
- the first foot zone (20.1) being associated with the first seat (11.1) facing an opening (21.1) of the first foot zone (20.1), said first foot zone (20.1) being delimited by an upper wall (27.1, 27.2) forming a table for a passenger of the second seat (11.2) who does not have access to the opening (21.1) of the first foot zone (20.1),
- the second foot zone (20.2) being associated with the second seat (11.2) facing an opening (21.2) of the second foot zone (20.2), said second foot zone (20.2) being delimited by an upper wall (27.2) forming a table for a passenger of the first seat (11.1) who does not have access to the opening (21.2) of the second foot area (20.2),
**characterized in that** a width of the seating surface (15.1) of the first seat (11.1) is smaller in a part of the seating surface (15.1) facing the second foot zone (20.2) than a width of a part of the seating zone (15.1) facing the first foot zone (20.1) so as to increase a space (E) between the seating surface (15.1) of the first seat (11.1) and the second foot zone (20.2),
- and **in that** said assembly comprises a double-door module (32) provided with two doors (33.1, 33.2) that are each movable between a stored position and a deployed position in which a door (33.1, 33.2) is capable of transversely closing a corresponding space between a seat (11.1, 11.2) and the central console (18), the doors (33.1, 33.2) overlapping at least partly inside the double-door module (32) when the doors (33.1, 33.2) are in the stored position.

2. The assembly according to Claim 1, **characterized in that** in the part of the seating surface (15.1) of the first seat (11.1) facing the second foot zone (20.2), at least a portion of a front edge (30.1) of said seating surface (15.1) has a curved shape.

3. The assembly of seats according to Claim 1 or 2, **characterized in that** a width of the seating surface (15.2) of the second seat (11.2) is smaller in a part facing the first foot zone (20.1) than a width of a part of the seating surface (15.2) facing the second foot zone (20.2) so as to increase a space (E) between the seating surface (15.2) of the second seat (11.2) and the first foot zone (20.1).

4. The assembly of seats according to Claim 3, **characterized in that** in the part of the seating surface (15.2) of the second seat (11.2) facing the first foot zone (20.1), at least a portion of a front edge (30.2) of said seating surface (15.2) has a curved shape.

5. The assembly of seats according to any one of the claims 1 to 4, **characterized in that** each seat (11.1, 11.2) has side edges (13) substantially aligned with side edges of the other seat (11.1, 11.2).

6. The assembly of seats according to any one of the claims 1 to 5, **characterized in that** it comprises two retractable panels (36.1, 36.2) that are movable between a stored position and a deployed position in which a panel (36.1, 36.2) closes a corresponding space (37.1, 37.2) above a side edge (13) of a seat (11.1, 11.2) positioned on the side of an aisle (29).

7. The assembly according to any one of the claims 1 to 6, **characterized in that** a ratio of a sum of a width (L2) of the central console (18) and two thicknesses (L3, L4) of fixed shells surrounding the backrests (16.1, 16.2) to a pitch length (L5) of said assembly of two seats (11.1, 11.2) is between 25% and 40%, and is preferably of about 33%.

8. The assembly of seats according to any one of the claims 1 to 7, **characterized in that** a seat (11.1, 11.2) is convertible between a sitting position and a lying position and **in that** a space is provided between the seat (11.1, 11.2) and the central console (18) so as to be filled by at least a portion of the seat (11.1, 11.2) when the latter is in the lying position.

9. The assembly of seats according to Claim 8, **characterized in that** when a seat (11.1, 11.2) is in the lying position, at least one portion of the seating surface (15.1, 15.2) is superimposed vertically with a closed foot zone (20.2, 20.1) on the side of the seat (11.1, 11.2) comprising the seating surface (15.1, 15.2).

10. The assembly of seats according to any one of the claims 1 to 9, **characterized in that** as a bed surface (40.1, 40.2) is formed by at least one portion of the seating surface (15.1, 15.2) and at least one portion of the backrest (16.1, 16.2) when the seat (11.1, 11.2) is in the lying position as well as an internal wall (22.1, 22.2) of the open foot zone (20.1, 20.2) associated with said seat (11.1, 11.2), a ratio between an area (A1) of the bed surface (40.1, 40.2) divided by an area (A2) of a living space associated with a seat (11.1, 11.2) is between 90% and 100%.

11. The assembly of seats according to any one of the claims 1 to 10, **characterized in that** the central console (18) comprises a partition wall (19).

12. An aircraft cabin (12) **characterized in that** it comprises at least one column of assemblies (10) of seats (11.1, 11.2) as defined according to any one of the preceding claims.
